# EUROPEAN PATENT APPLICATION

(11) **EP 3 498 457 A1**
(43) Date of publication of application: **19.06.2019**
(21) Application number: 17207773.7
(22) Date of filing: 15.12.2017
(51) Int. Cl.: B29C 64/153, B22F 3/105, B33Y 10/00, B33Y 30/00, B33Y 50/00, B29C 64/386, B29C 64/264, B29C 64/25

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Hetzel, Ralf, 96231 Bad Staffelstein (DE); Schmidbauer, Christoph, 96465 Neustadt bei Coburg (DE)
(74) Representative: Hafner & Kohl

(57) **Abstract**

Apparatus (1) for additively manufacturing of three-dimensional objects (2) by means of successive layerwise selective irradiation and consolidation of layers of a build material which can be consolidated by means of an energy source, which apparatus (1) comprises a process chamber (3) with at least one build plane (4) in which build material is directly irradiatable, **characterized by** at least one safety device (14) adapted to determine at least one chemical and/or at least one physical parameter, wherein the safety device (14) is adapted to control an access state of the process chamber (3) dependent on the determined chemical and/or physical parameter.

## Description

The invention relates to an apparatus for additively manufacturing of three-dimensional objects by means of successive layerwise selective irradiation and consolidation of layers of a build material which can be consolidated by means of an energy source, which apparatus comprises a process chamber with at least one build plane in which build material is directly irradiatable.

Such apparatuses are generally known from prior art, in which build material is arranged in a build plane that can directly be irradiated via an energy source, in particular an energy beam such as an electron beam or a laser beam. The build plane is arranged inside a process chamber in which typically a process atmosphere is generated to meet defined process requirements. For example, when using reactive build materials, an inert gas has to be provided to avoid a reaction of the reactive build material with ambient air, in particular oxygen contained in the ambient air.

Further, it is known from prior art that the conditions inside the process chamber, in particular the atmosphere in the process chamber may be hazardous for a user, in particular, if the user comes in direct contact with a surface of the process chamber or if the user is exposed to the process atmosphere. In general, a danger for the user or service personnel, respectively, could lie in the fact that due to the depletion of energy into the build plane, for example by irradiating parts of the build plane with the energy beam, e.g. a laser beam, the respective parts of the build plane will heat up to a defined temperature, e.g. over a melting temperature or a sintering temperature of the build material. If the user comes in contact with these parts of the build plane the direct contact could cause burns to the user.

Another danger for the user could be caused by the atmosphere as a process gas may be used to temper the process chamber. Thus, the process gas may also heat up in that a direct contact of the process gas could be hazardous for the user. Further contents in the process gas, such as a chemical composition or fine particles the process gas is charged with could harm the user if the user is exposed.

It is an objective to provide an apparatus for additively manufacturing of three-dimensional objects, wherein the safety for a user is improved, in particular the dangers for the user are reduced.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, during additive manufacturing processes, in particular inside a process chamber of an additive manufacturing apparatus, process conditions may occur that possibly pose a danger to the user. The present invention provides a safety device that allows for reducing the danger the user faces when interacting with additive manufacturing apparatuses, in particular when interacting with components inside the process chamber.

The invention is based on the idea that at least one safety device is provided that is adapted to determine at least one chemical and/or at least one physical parameter, wherein the safety device is adapted to control an access state of the process chamber dependent on the determined chemical and/or physical parameter. Thus, an access state of the process chamber can be controlled to avoid the chance of the user getting in contact with the potentially hazardous process environment. Due to the control of the access state of the process chamber, the safety device can actively control, whether access is granted to the user or whether the user is prevented from gaining access to the process chamber and the potentially hazardous process environment inside the process chamber.

For deciding how the access state of the process chamber has to be controlled or whether or not access should be granted to the user, the at least one safety device is adapted to determine at least one chemical and/or at least one physical parameter. Hence, the safety device is generally adapted to determine chemical and/or physical parameters of the process environment to determine whether or not it is safe for a user to access the process chamber. The term "process chamber" of the additive manufacturing apparatus in the scope of this application refers to all chambers of apparatuses or enclosed volumes of apparatuses in which the process environment may put a potential risk to the user. In particular, handling chambers of handling stations, such as glove boxes or the like are included in the term "process chamber" in the scope of this application.

The process chamber further comprises not only the build material in the build plane that is directly irradiated via the energy source and thereby heated to a potentially hazardous temperature, but the process chamber may also comprise other surfaces or components, for example parts of the build plane that are not directly irradiated but heated due to tempering the build plane or the powder bed due to process requirements. Additionally, surfaces or components of the apparatus that are indirectly heated, for example by scattered radiation or heat transfer, can also be observed via the determination of the at least one chemical and/or physical parameter.

Further, the determination of the at least one chemical and/or a physical parameter is not limited to the build plane or directly irradiated regions of the build plane, such as a consolidation zone, but zones adjacent to the consolidation zone may also be observed that are heated due to heat transfer. It is also possible to determine more than one zone or region, for example if more than one energy source is used or more than one consolidation zone is irradiated at the same time. Hence, the present invention allows for directly determining a potential hazard to the user. For example, a temperature in the build plane (the uppermost layer of build material in a build chamber that is directly irradiated) can directly be measured or determined, instead of measuring the temperature of the build plate and indirectly extrapolating from the measured temperature to the temperature of the build plane or other components inside the process chamber.

The at least one chemical and/or physical parameter preferably may be or may comprise
- a parameter relating to an atmosphere in the process chamber and/or
- a process parameter and/or
- a temperature of at least one region of the process chamber.

Hence, the parameter may relate to the atmosphere inside the process chamber to determine whether a contact of the user with the atmosphere that is contained in the process chamber poses a risk to the health of the user. Additionally or alternatively a process parameter may be determined that refers to the execution of the additive manufacturing process inside the additive manufacturing apparatus. Such a process parameter can for example be a process step, such as a preconditioning step of the process chamber, such as an inertization state or a heating step in which the process atmosphere is heated to a defined temperature. In particular, an atmosphere value may be defined that may inter alia relate to a chemical composition or a ratio of fine particles in the process gas or a temperature of the process gas, wherein access is only granted to the user if, e.g. an oxygen ratio is above a defined value or within an allowable range, for example above 19%. Of course, any arbitrary other process parameter that is related with the process atmosphere inside the process chamber can be taken into calculation, such as the irradiation parameters, parameters relating to the stream generating device, the operation of heating devices inside the process chamber and the like.

The at least one chemical and/or physical parameter may also contain information relating to at least one temperature of at least one region of the process chamber, wherein multiple regions of the process chamber (or components of the process chamber) may be defined and observed to determine whether or not it is safe for a user to gain access to the process chamber and whether the user can safely interact with the defined and observed regions and components of the process chamber. Thus, a temperature value may be defined below which a safe interaction of the user with the process chamber, in particular the build plane is possible. In general, the temperature value can be defined arbitrarily, wherein it can be taken into calculation whether service personnel or the user interacts with the process chamber with personal safety equipment, such as gloves or not. An exemplary allowable temperature range may be defined between 30°C and 100°C, preferably between 45°C and 75°C and/or a temperature value may be defined, wherein access is granted to the user, if the determined temperature is below the defined temperature value, wherein the preferred temperature value may be defined as 51°C.

Another aspect of the safety device may take into calculation that the parameter relating to an atmosphere in the process chamber may be a ratio of process gas and/or a ratio of fine particles in the atmosphere and/or a temperature of the gas in the atmosphere and/or a chemical composition of the gas. Thus, for example, if the additive manufacturing process is finished and the process gas is removed from the process chamber, the access state can be controlled dependent on the ratio of process gas that is contained within the process chamber (or the ratio of oxygen, respectively). Additionally, the process gas that is still contained within the process chamber can be collected to avoid the user coming in contact with the process gas and to avoid process gas being released into the environment. Another aspect the parameter relating to an atmosphere in the process chamber can comprise is a ratio of fine particles in the atmosphere, such as non-consolidated build material or smoke or smolder the gas in the atmosphere is charged with. Preferably, the ratio of fine particles is detected to prevent the user from breathing in fine particles. Thus, the access state is controlled in that access is only granted to user, if the ratio of fine particles is below a defined fine particle value.

As described before, the temperature of the gas can also be determined and considered to avoid the user coming in contact with hot gas. Another aspect to consider may be the chemical composition of the gas to avoid components in the gas to be harmful to the health of the user. Preferably access is not granted to a user, if the ratio of oxygen in the process gas is below 19%.

According to another embodiment of the apparatus, the safety device may be adapted to control the access state to grant a user access to the process chamber dependent on a defined value, in particular with the determined parameter below a defined value. Thus, a value may be defined for the at least one chemical and/or physical parameter to decide whether access is granted to the user or not. The safety device therefore, determines the at least one chemical and/or physical parameter continually or in intervals, wherein the access state is controlled in that access is not granted to the user, if the defined value is not met, in particular if the defined value is exceeded. For example, a temperature value may be defined, preferably 51°C, above which the safety device controls the access state in that the user is not granted access to the process chamber.

Further, it is possible to have multiple parameters defined, such as the temperature of at least one region or component of the apparatus and at least one parameter relating to the atmosphere. Preferably, the access state is controlled via the safety device in that access is only granted to the user if all determined parameters meet the corresponding defined value, in particular are below the corresponding defined value. The defined value can also be deemed or defined as threshold value. Of course, instead of having a defined value, an allowable range can be defined, wherein the safety device is adapted to control the access state in that access is granted to the user only if the corresponding determined parameter is within the corresponding allowable range.

The apparatus may further be improved in that the safety device may be adapted to determine the temperature of at least one surface of the process chamber and/or of at least one region of the build plane, in particular the surface of the build plane, preferably a last irradiated part of the build plane and/or a last applied layer of build material. By having the temperature of a corresponding surface directly determined, the risk for the health of the user can also directly be estimated. In particular, it is not necessary to extrapolate the effects of a component being heated to a defined temperature on another surface or component. Instead, the temperature of the corresponding surface or component the user may contact by interacting with the process chamber can directly be determined, preferably measured.

Preferably a region of the build plane is observed that has been last irradiated and/or in which part of the build plane a layer of build material has last been applied. Thus, instead of extrapolating the temperature of a build plate or layer of build material that has been applied or irradiated in an arbitrary step of the manufacturing process, in particular in the beginning of the manufacturing process, the region or part of the build plane that has been irradiated last or in which a layer of build material has been applied last is determined. Thus, the part that has been irradiated last can be considered as the part of the build plane with the highest temperature. Therefore, the risk of posing a hazard to the health of the user is the highest with the surface or component having the highest temperature, in particular being irradiated last.

Further, the safety device may be adapted to control the locking status of at least one opening, in particular a door, in the process chamber. The at least one opening may be deemed as access point through which the user gains access to the process chamber or can interact with the inside of the process chamber, respectively. Dependent on the at least one chemical and/or physical parameter that has been determined via the safety device, the locking status of the at least one opening in the process chamber can be controlled. Thus, if the at least one chemical and/or a physical parameter indicates that the process environment poses a potential hazard to the health of the user, the opening in the process chamber may remain locked. If the safety device determines that the at least one parameter meets or falls below a defined value or is within an allowable range, the locking status of the at least one opening can be controlled in that the at least one opening, in particular a door, can be unlocked to provide access to the user in that the user can open the opening.

According to another embodiment of the apparatus, the safety device may be adapted to control a movement of at least one carrying device carrying the build plane to another apparatus or to another region of the apparatus, in particular a handling chamber. As described before, a handling station in which non-consolidated build material can be removed from an additively built object can also be deemed as apparatus in the scope of this application, wherein the corresponding handling chamber can be deemed as process chamber in the scope of this application. It is also possible that the apparatus for additively manufacturing three-dimensional objects comprises a process chamber in which the actual manufacturing process takes place and a handling chamber in which non-consolidated build material is removed from the additively built object or in which the object is cleaned, respectively.

The safety device is adapted to control a movement of at least one carrying device carrying the build plane in that the build plane may only be moved to another apparatus or to another region of the apparatus, if the determined chemical and/or physical parameter meets the defined value or is within the allowable range. For example, the safety device controls a movement of the at least one carrying device in that the build plane may only be moved to another apparatus or another region of the apparatus, if the temperature of the build plane is below a defined temperature value, for example 51°C.

The safety device preferably comprises at least one non-contact sensor. The at least one non-contact sensor may be or may comprise an infrared sensor and/or a pyrometer and/or a camera. By having the at least one sensor built as or comprise at least one non-contact sensor, the arrangement of the sensor can be chosen more flexible. In particular, the sensor may be arranged outside of a working space of an irradiation device, in particular outside the space in which an energy beam is scanned over the build plane. Of course, multiple sensors can be provided to determine multiple surfaces or regions of the process chamber, such as multiple regions of the build plane. It is also possible to provide two-dimensional sensors such as a pyrometer or a camera that are adapted to spatially resolve the temperature in the process chamber, in particular in the build plane.

According to another embodiment of the apparatus, the at least one sensor may be arranged in or at an opening of the process chamber. This allows for determining the at least one chemical and/or a physical parameter inside the process chamber and also allows for arranging the at least one sensor out of movement paths or working spaces of the components of the apparatus used in the additive manufacturing process. Preferably, the at least one sensor may be arranged in a gas flow channel, preferably in a suction channel and/or a discharge channel, in particular a funnel of a suction channel or a discharge channel, connected to the process chamber. Thus, the at least one sensor may be arranged in an opening that is already provided with the process chamber, such as a gas flow channel through which the process gas is guided. In particular by having the at least one sensor arranged in a gas flow channel (or in the region of an opening of the gas flow channel) the sensor may measure the temperature inside the process chamber and it is also possible to measure the temperature of at least one surface in the process chamber. Further, (for example by using a sensor group) the temperature of the process gas may be measured, preferably in a suction channel and/or a discharge channel.

The arrangement of the at least one sensor in or at a funnel of the gas flow channel further allows for having the sensor arranged on a surface that is already arranged relative to the build plane in that an optical sensor can be directed onto the build plane without an additional support.

Further, at least two sensors may be provided to determine the same parameter, in particular two sensors with different measuring principles. By having at least two sensors determine the same parameter, the reliability of the determination is increased, since a redundancy is achieved. In particular, by having the at least two sensors using two different measuring principles for determining or measuring the same parameter, for example the temperature, an error in the measurement of one of the measuring principles or one of the sensors can be detected and compensated by relying on the determination of the at least one parameter via the other sensor or the other measuring principle, respectively.

Besides, the invention relates to a safety device for an apparatus for additively manufacturing three-dimensional objects, in particular an inventive apparatus as described before, which apparatus comprises a process chamber with at least one build plane in which build material is directly irradiated, wherein the safety device is adapted to determine at least one chemical and/or at least one physical parameter, wherein the safety device is adapted to control an access state of the process chamber dependent on the determined chemical and/or physical parameter.

Additionally, the invention relates to a method for operating at least one apparatus for additively manufacturing three-dimensional objects by means of successive layerwise selective irradiation and consolidation of layers of a build material which can be consolidated by means of an energy source, which apparatus comprises a process chamber with at least one build plane in which build material is directly irradiated, wherein at least one chemical and/or at least one physical parameter is determined, wherein an access state of the process chamber is controlled dependent on the determined parameter. The inventive method may, of course, be performed on the inventive apparatus.

Self-evidently, all features, details and advantages described with respect to the inventive apparatus are fully transferable to the inventive safety device and the inventive method.

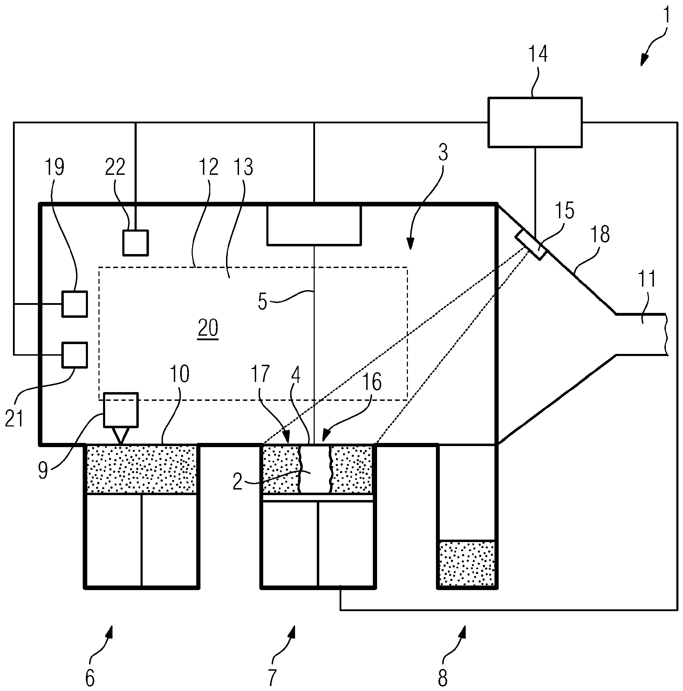

An exemplary embodiment of the invention is described with reference to the Fig. The sole Fig. is a schematic diagram showing an inventive apparatus.

The sole Fig. shows an apparatus 1 for additively manufacturing of three-dimensional objects 2 by means of successive layerwise selective irradiation and consolidation of layers of a build material which can be consolidated by means of an energy source. The apparatus 1 comprises a process chamber 3 in which a build plane 4 is arranged, wherein build material that is arranged in the build plane 4 can directly be irradiated by an energy beam 5, for example a laser beam.

Optionally, the apparatus 1 comprises a dose module 6 and a build module 7 as well as an overflow module 8. Build material can be provided by the dose module 6, wherein an application unit 9 is used to convey build material from a dose plane 10 to the build plane 4. The apparatus 1 further comprises a gas flow channel 11 through which process gas can be streamed into the process chamber 3.

To provide service personnel or users access to the process chamber 3, the apparatus 1 comprises an opening 12 which functions as access point through which a user may gain access to and interact with components in the process chamber 3. With the opening 12 in a locked state, in which the opening 12 is sealed with a door 13, the service personnel or the user cannot access the process chamber 3.

As the additive manufacturing process is performed inside the process chamber 3, the process environment may pose a hazard to the health of a user or service personnel as, for example, an inert gas is used as process gas that may additionally be tempered. The process gas may further be charged with residues, in particular particles, such as non-consolidated build material, smoke or smolder. Another potential hazard to the health are high temperatures, in particular heated surfaces inside the process chamber 3 that are heated to temperatures that can cause harm if they are directly contacted, in particular touched. For example, the energy beam 5 irradiating the build material in the build plane 4 heats the build material due to the energy depletion. As, for example, a metal powder is used as build material, defined temperatures are required to melt or sinter the build material.

To reduce potential hazards to the health of the user or service personnel, the apparatus 1 comprises a safety device 14 that is adapted to determine at least one chemical and/or at least one physical parameter. Dependent on the determined chemical and/or physical parameter the safety device 14 is adapted to control the access state of the process chamber 3, in particular by controlling the access state (locking state) of the door 13.

The safety device 14 is connected with a temperature sensor 15, for example a camera or a pyrometer or an infrared sensor that is directed towards the build plane 4. In other words the temperature of the build plane 4, in particular build material arranged in a consolidation zone of the build plane 4 can directly be measured via the temperature sensor 15. Of course, it is possible to have more than one temperature sensor 15 provided to ensure a redundancy of the temperature measurement and to cover more than one region in the build plane 4 or other surfaces or components inside the process chamber 3. Preferably, the additional temperature sensor relies on a different measurement principle. With the temperature sensor 15 built as a camera or pyrometer it is possible to spatially resolve the temperature of different regions of the build plane 4, for example a consolidation zone 16 and at least one adjacent zone 17 adjacent to the at least one consolidation zone 16.

The temperature sensor 15 is also adapted to determine the temperature of other surfaces inside the process chamber 3 or other components inside the process chamber 3, such as the application unit 9. The determined temperature values of the corresponding surfaces or components inside the chamber 3 can be sent to the safety device 14 or the safety device 14 is adapted to receive the determined temperature values, respectively. As can further be derived from the Fig., the temperature sensor 15 is arranged in the gas flow channel 11, in particular at a funnel 18 arranged at an opening of the process chamber 3. The inclination of the surface of the funnel 18 (relative to the build plane 4) the temperature sensor 15 is attached to allows for a direct measurement of the temperature in the build plane 4, as described before.

Further, an environmental sensor 19 is assigned to the safety device 14. The environmental sensor 19 is adapted to determine at least one chemical and/or physical parameter of the atmosphere 20 inside the process chamber 3. In particular, the environmental sensor 19 is adapted to determine a temperature of the process gas inside the process chamber 3 and a chemical composition of the process gas and a ratio of fine particles the process gas is charged with.

Additionally, a process parameter sensor 21 is assigned to the safety device 14, wherein the process parameter sensor 21 is adapted to determine at least one process parameter, such as a process step that is currently performed in the apparatus 1 and further process parameters relating to components of the apparatus 1, such as heating parameters, in particular a temperature of a heating element or irradiation parameters, such as an energy beam power.

Dependent on the chemical and/or physical parameter(s) that are determined via the temperature sensor 15, the environmental sensor 19 or the process parameter sensor 21 that can be received via the safety device 14, the safety device 14 is adapted to control the access state of the opening 12. Thus, the safety device 14 is connected with a door lock 22 the door 13 sealing the opening 12 can be locked with.

Therefore, the safety device 14 is adapted to monitor whether the at least one chemical and/or physical parameter is within an allowable range or meets (falls below) the defined corresponding value. For example, a temperature value of the surfaces and the components inside the process chamber 3 can be defined, in particular 51°C. If the temperature of one of the components or of one of the surfaces that are monitored via the temperature sensor 15 exceeds 51°C, the safety device 14 controls the access state of the process chamber 3 in that a user or service personnel is not granted access to the process chamber 3. To control the access state of the process chamber 3, the safety device 14 adjusts the locking state of the door lock 22 to prevent the opening 12 from being opened.

Accordingly, if one of the environmental parameters determined via the environmental sensor 19 or one of the process parameters determined via the process parameter sensor 21 are not within the corresponding allowable range or do not meet the corresponding defined value, the safety device 14 restricts the access to the process chamber 3 accordingly. The safety device 14 therefore, controls the access state of the process chamber 3 in that a locking state of the door lock 22 is controlled in that the opening 12 cannot be opened and therefore, a user or service personnel does not gain access to the process chamber 3. If the corresponding parameter meets the defined value or falls within the allowable range, in particular all determined parameters, the safety device 14 is adapted to control the locking state of the door lock 22 accordingly, in that the door 13 is unlocked. With the door 13 in an unlocked state, the user may open the door 13 and gain access to the process chamber 3.

The safety device 14 further is adapted to control a movement of the build plane 4, in particular a movement of the dose module 7 (or a carrying device of the dose module 7 carrying the build plane 4). As described before, if at least one of the chemical and/or physical parameters does not meet the corresponding defined value or is not within the allowable range, the safety device 14 can control the movement of the dose module 7 or the build plane 4, respectively, in that the build plane 4 is not moveable into another apparatus or into another region of the apparatus 1.

Thus, the safety device 14 ensures that a user or service personnel does not gain access to the process chamber 3 unless the process environment inside the process chamber 3 meets predefined requirements. Especially, it is ensured that by gaining access to the process chamber 3 and interacting with the inside of the process chamber 3 the user or service personnel is not exposed to a hazardous environment.

Of course, the inventive method can be performed on the inventive apparatus 1.

## Claims

1. Apparatus (1) for additively manufacturing of three-dimensional objects (2) by means of successive layerwise selective irradiation and consolidation of layers of a build material which can be consolidated by means of an energy source, which apparatus (1) comprises a process chamber (3) with at least one build plane (4) in which build material is directly irradiatable, **characterized by** at least one safety device (14) adapted to determine at least one chemical and/or at least one physical parameter, wherein the safety device (14) is adapted to control an access state of the process chamber (3) dependent on the determined chemical and/or physical parameter.

2. Apparatus according to one of the preceding claims, **characterized in that** the at least one chemical and/or physical parameter is or comprises
- a parameter relating to an atmosphere in the process chamber (3) and/or
- a process parameter and/or
- a temperature of at least one region of the process chamber (3).

3. Apparatus according to one of the preceding claims, **characterized in that** the parameter relating to an atmosphere in the process chamber (3) is a ratio of process gas and/or a ratio of fine particles in the atmosphere and/or a temperature of the gas in the atmosphere and/or a chemical composition of the gas.

4. Apparatus according to one of the preceding claims, **characterized in that** the safety device (14) is adapted to control the access state to grant a user access to the process chamber (3) dependent on a defined value, in particular with the determined parameter below a defined value.

5. Apparatus according to one of the preceding claims, **characterized in that** the safety device (14) is adapted to determine the temperature of at least one surface of the build plane (4), in particular a last irradiated part of the build plane (4) and/or a last applied layer of build material.

6. Apparatus according to one of the preceding claims, **characterized in that** the safety device (14) is adapted to control a locking status of at least one opening (12), in particular a door, in the process chamber (3).

7. Apparatus according to one of the preceding claims, **characterized in that** the safety device (14) is adapted to control a movement of at least one carrying device carrying the build plane (4) to another apparatus or to another region of the apparatus (1), in particular a handling chamber.

8. Apparatus according to one of the preceding claims, **characterized in that** the safety device (14) comprises at least one non-contact sensor (15, 19,21).

9. Apparatus according to one of the preceding claims, **characterized in that** the at least one non-contact sensor (15, 19, 21) is or comprises an infrared sensor (15, 19, 21) and/or a pyrometer and/or a camera.

10. Apparatus according to one of the preceding claims, **characterized in that** the at least one sensor (15, 19, 21) is arranged in or at an opening (12) of the process chamber (3).

11. Apparatus according to one of the preceding claims, **characterized in that** the at least one sensor (15, 19, 21) is arranged in a gas flow channel (11), preferably in a suction channel and/or a discharge channel, in particular a funnel (18) of the gas flow channel, connected to the process chamber (3).

12. Apparatus according to one of the preceding claims, **characterized in that** at least two sensors (15, 19, 21) are provided to determine the same parameter, in particular two sensors (15, 19, 21) with different measuring principles.

13. Safety device (14) for an apparatus (1) for additively manufacturing three-dimensional objects, in particular an apparatus (1) according to one of the preceding claims, which apparatus (1) comprises a process chamber (3) with at least one build plane (4) in which build material is directly irradiated, **characterized in that** the safety device (14) is adapted to determine at least one chemical and/or at least one physical parameter, wherein the safety device (14) is adapted to control an access state of the process chamber (3) dependent on the determined chemical and/or physical parameter.

14. Method for operating at least one apparatus (1) for additively manufacturing three-dimensional objects by means of successive layerwise selective irradiation and consolidation of layers of a build material which can be consolidated by means of an energy source, which apparatus (1) comprises a process chamber (3) with at least one build plane (4) in which build material is directly irradiated, **characterized in that** at least one chemical and/or at least one physical parameter is determined, wherein an access state of the process chamber (3) is controlled dependent on the determined parameter.

15. Method according to claim 14, **characterized in that** the method is performed on an apparatus (1) according to one of the claims 1 to 12.
